Europäisches Patentamt

European Patent Office

Office européen des brevets

(11) Publication number: **0 321 426 B1**

# EUROPEAN PATENT SPECIFICATION

(45) Date of publication of patent specification: **28.10.92**  (51) Int. Cl.5: **H04Q 11/04**, H04Q 1/24

(21) Application number: **88850400.8**

(22) Date of filing: **23.11.88**

(54) **An error correction method in a switch and a switch provided with error correction means.**

(30) Priority: **18.12.87 SE 8705065**

(43) Date of publication of application:
**21.06.89 Bulletin 89/25**

(45) Publication of the grant of the patent:
**28.10.92 Bulletin 92/44**

(84) Designated Contracting States:
**BE CH DE ES FR GB GR IT LI NL**

(56) References cited:
**GB-A- 1 570 113
US-A- 3 538 498
US-A- 4 497 059**

**PATENT ABSTRACTS OF JAPAN, vol. 9, no.
123 (E-317), 21st January 1985; & JP-
A-60-10996**

(73) Proprietor: **TELEFONAKTIEBOLAGET L M
ERICSSON
Patent and Trademark Department
S-126 25 Stockholm(SE)**

(72) Inventor: **Roos, Sture Gösta
Linjevägen 3 Box 9
S-760 10 Bergshamra(SE)**

(74) Representative: **Lövgren, Tage et al
Telefonaktiebolaget L M Ericsson Patent De-
partment
S-126 25 Stockholm(SE)**

## Description

### TECHNICAL FIELD

The present invention relates to a switch for use in time multiplexed telecommunication systems, the switch having corresponding equipment functionally arranged in three planes. The invention also relates to an error correction method in such a switch. More specifically, the invention relates to a method and a switch where corresponding information and equipment from all three planes is utlilized to correct information errors in one plane.

### BACKGROUND ART

According to Patents Abstracts of Japan, Vol 9, No. 123 (E-317), the published Japanese patent application 60-10996 relates to a "Time division highway switch device". The abstract comprises a figure and the following information.

PURPOSE: To extract a desired output from a channel memory by providing an odd number of channel memories and storage memories respectively and extracting the majority decision of an output of the memories by means of a majority decision processor provided separately to utilize the output of the majority decision processor.

CONSTITUTION: The transmitted time division information is stored sequentially by using the transmitted highway number and time slot number as an address. Storage memories 3a, 3b-3c use the highway number and time slot number of an output highway 5 based on connection control information and each highway number and each time slot number of an input highway 2 are stored. A data stored in the storage memories 3a- is impressed to the majority decision processor8, where majority decision is taken and its output is impressed to an address bus of the channel memories 1a-1c. Thus, the time division information stored in the channel memories 1a-1c is read. The time division information is impressed to the majority decision processor 7, where the majority decision is taken and the result is outputted to the output highway 5.

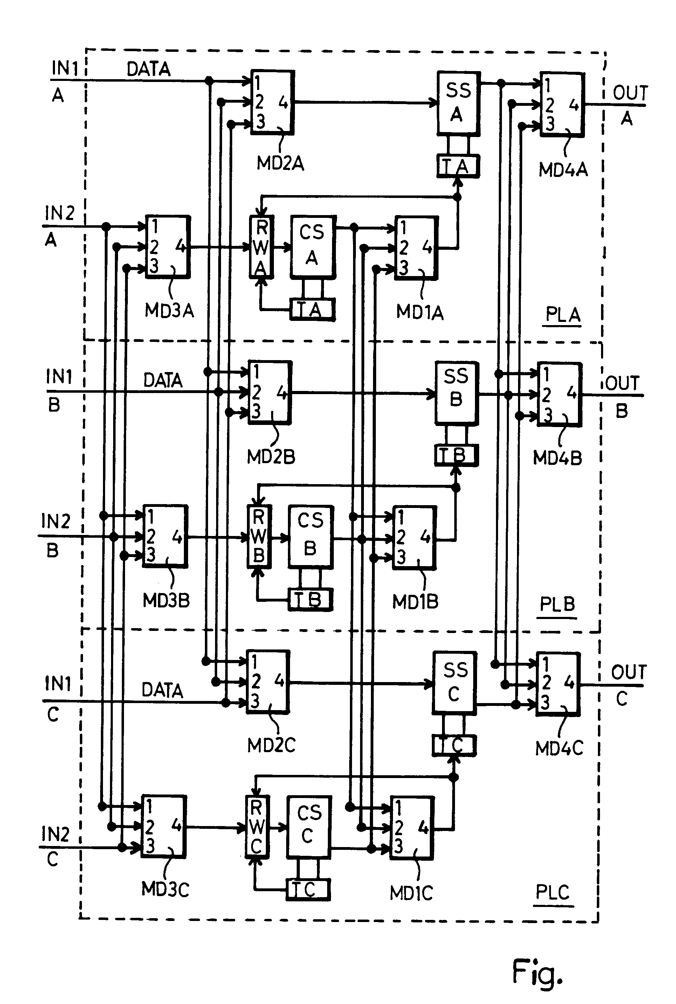

British Patent 1570113 relates to electronic systems employing multiplicated logic units with majority decision volting techniques used to give usable outputs when errors occur. Figure 1 of the patent specification illustrates part of a TST switch (Time-Space-Time) having some equipment triplicated and majority decision devices connected to control stores and outgoing time switches.

US 3538498 teaches an arrangement of triplicated equipment intended for transmitting information via three transmission paths. Each transmission path may include a multiplexer, a bus and a demultiplexer. For the purpose of detecting and correcting errors in the information transferred, there is made on the receiver side a majority selection between corresponding information which has been transmitted via the different transmission paths. Also described in U.S. 3,538,498 is a binary majority selection means intended for carrying out bit for bit comparisons and for making bit for bit majority selection between binary information on three buses.

A system which includes a plurality of redundant channels which operate synchronously for the processing and transmission of information is known from U.S. 4,497,059. Each channel includes selection means intended for making a selection between information deriving from different channels, a processor, and algorithm selection means for choosing between different selected information in the channel, in accordance with a given algorithm.

### DISCLOSURE OF INVENTION

To the best knowledge of the inventor prior art switches with triplicated control stores for connection information and triplicated switch stores for speech or data are not self-healing or self-correcting with respect to temporary errors in the connection information in the control stores. Accordingly an error in one read address forwarded to one switch store can re-occur sequentially in corresponding time slots a large number of times during the course of a connection, e.g. a telephone conversation or a data communication.

To the best knowledge of the inventor prior art switches with triplicated control stores and triplicated switch stores do not comprise triplicated majority decision devices for forwarding information from the control stores to the switch stores. Thus the switch becomes sensitive to errors in single majority decision devices for forwarding information.

Although majority decision devices based on bit for bit comparison and bit for bit majority selection are known per se for serial data it is, to the best knowledge of the inventor, not known to implement bit for bit comparison and bit for bit majority selection for information written into and read out of control stores in parallell. Word by word comparison and majority decision, in particular by processors, tend to slow down the information transfer making multiple majority decision in a switch difficult to comply with maximum permissible delay.

The object of the present invention is to provide a switch and a method with which supervision and maintenance need not have the aforementioned drawbacks.

Another object of the present invention is to provide a switch and a method for time-multiplexed connections where supervision and selection of information from different planes can be effected relatively quickly and simply with comparatively simple and inexpensive equipment in relation to select performance.

Another object of the present invention is to provide for time-multiplexing telecommunication systems a switch which includes more than one plane, and a method in which error-free information and equipment in one plane of the switch can replace, comparatively simply and to a comparatively high extent, corresponding erroneous information and faulty equipment in another plane of the switch.

A further object of the present invention is to provide for telecommunication systems which include time-multiplexed connections a switch and a method which is self-healing in respect of temporary errors of information concerning established connections in the control store means.

Still another object of the present invention is to provide a switch which includes means which operate synchronously in more than one plane, and a method in which a plurality of comparisons and selections can be made between both corresponding data and corresponding connection information in three different planes, so that the switch as a whole is able to operate error-free, even in given instances when no individual plane operates entirely without error.

The characterizing features of a method and a switch according to the present invention will be apparent from the following claims. In brief, it can be said that a method and a switch devised and constructed in accordance with the invention are based on the presence of three synchronously operating planes and on the comparison and majority selection, bit for bit, between corresponding information deriving from the three planes. Both corresponding data transmitted on connections in different planes through the switch and corresponding control information concerning established connections in different planes can be compared and majority-selected bit for bit in each plane. Majority-selected control information is returned to respective planes.

The inventive switch and method afford several advantages. The comparison and majority selection bit for bit can be effected relatively quickly and easily and with the aid of comparatively simple and inexpensive equipment. Only one comparison and one majority selection need be made between three corresponding bits from their respective planes for the selection of a given bit. Remaining bits in the same word and in the three planes lack significance in this comparison and majority selection. No parity or any error supervision result need be determined on the basis of any full word. Data transmitted on an established data connection can be compared quickly and simply and is majority selected both prior to being stored and subsequent to being read from switch store means. Control information arriving from the control store means of the different planes can be compared and majority selected quickly and simply, prior to being introduced into switch store means in respective planes. Selected control information can be re-written into control store means in all planes, whereby the switch becomes self-healing upon the occurance of temporary errors in the control information in the control store means in one plane. In summary, a method and a switch devised and constructed in accordance with the invention enables the detection of all types of bit error in both data and in control information occurring in solely one of three planes. Detected errors occurring in solely one plane at a time can be isolated and corrected automatically. Other advantages will become apparent to those skilled in this art subsequent to studying the following description of prefered embodiments.

## BRIEF DESCRIPTION OF DRAWING

Figure one illustrates equipment in three planes in a switch constructed in accordance with the invention.

## BEST MODE FOR CARRYING OUT THE INVENTION

Figure 1 illustrates a switch which includes three planes designated PLA, PLB and PLC respectively.

The switch plane PLA includes switch store means SSA with associated read and write means TA, control store means CSA with associated read and write means TA, first information selection means MD1A, second information selection means MD2A, third information selection means MD3A, fourth information selection means MD4A, re-write means RWA, an input IN1A for binary data transmitted on time-multiplex connections, an output OUTA for binary data on the time-multiplex connections, and an input IN2A for binary control information.

The planes PLB and PLC include means, inputs and outputs corresponding to those included in the plane PLA. The means included in respective planes PLB and PLC are synchronised with corresponding means in the plane PLA.

Each information selection means has three binary information inputs and a selected binary information output. Each information selection means is constructed to carry out a mutual comparison of the binary information present on its inputs 1, 2 and 3 and to generate on its output binary information which has the same binary value as the information on at least two of the binary inputs. Expressed in another way, this means that the information selection means makes a majority selection beween the information on the inputs. The information selection means carries out the comparison of the information on its inputs bit for bit, and reaches a decision bit for bit. Only the corresponding bits of the information on the three inputs have significance when making this comparison and selection. For example, if the information supplied to the input 1 is 10001011, whereas the information supplied to the input 2 is 01101100 and the information supplied to the input 3 is 11010100, the information selected on the output 4 will be 11001100. Thus, the selected information on the output 4 need not coincide entirely with the information on one of the inputs.

The first input 1 of the first information selection means of each plane is connected for receiving control information deriving from the control store means CSA in the plane PLA. The second input 2 of the first information selection means of each plane is connected for receiving control information deriving from the control store means CSB in the plane PLB. The third input 3 of the first information selection means of each plane is connected for receiving control information deriving from the control memory means CSC in the plane PLC.

The first input 1 of the second information selection means of each plane is connected for receiving data from the input IN1A in the plane PLA. The second input 2 of the second information selection means in each plane is connected for receiving data from the input IN1B in the plane PLB. The third input 3 of the second information selection means of each plane is connected for receiving data from the input IN1C in the plane PLC.

The first input 1 of the third information selection means of each plane is connected for receiving control information from the input IN2A of plane PLA for control information. The second input 2 of the third information selection means of each plane is connected for receiving control information from the control information input IN2B of the plane PLB. The third input 3 of the third information selection means of each plane is connected for receiving control information from the control information input IN2C of the plane PLC.

The first input 1 of the fourth information selection means of each plane is connected to receive data from the switch store means SSA in the plane PLA. The second input 2 of the fourth infomation selection means of each plane is connected for receiving data from the switch store means SSB in the plane PLB. The third input 3 of the fourth information selection means of each plane is connected for receiving data from the switch store means SSC in the plane PLC.

In the case of error-free function, the plane PLA receives on its input IN1A data which coincides with data received at the same time on the input IN1B of the plane PLB and on the input IN1C of the plane PLC.

Furthermore, in the case of error-free function the input IN 2A of the plane PLA receives control information which coincides with control information received in the input IN2B of the plane PLB at the same time, and also coincides with control information received at the same time on the input IN2C of the plane PLC.

With the exception of the information selection means and the re-write means, the switch store means and the control store means in one plane can be said to function individually and together in substantially the same manner as a speech memory and a control memory with associated means in a conventional time switch. Data entering the switch store means distributed on time slots is stored in the switch store means in memory locations determined by write addresses derived from the read and write means TA, TB or TC of the switch store means. Data stored in the switch store means is read and distributed on time slots which are determined by read addresses from the read and write means of the switch store means.

Connection control information relating to connections which are to be made through the switch are stored in the control store means in store locations which are determined by write addresses to the control store means from their read and write means. Connection control information stored in the control store means is read from store locations which are determined by read addresses written into the control store means from their read and write means. Connection control information from the control store means is sent to the read and write means of the switch store means, whereby the read-out and distribution of data from the switch store means on time slots is determined by connection control information stored in the control store means.

The control information passed to the read and write means of the switch store means in one plane is selected by the first information selection means in the same plane. Since the information selection means make a majority selection, the control information selected and passed to the read and write means will be correct in each plane, even if the control information from a control store means in one plane should be erroneous. The selected control information is also passed to the re-write means and is re-written into the control store means, provided that the connection is not to be disconnected. A temporary error in stored control information in the control store means of one single plane will therewith be rectified automatically for ongoing connections, owing to the fact that it is the selected control information which is re-written into the control store means on the location of the previously read out erroneous control information.

Data which is to be stored in the switch store means in one plane is selected by the second information selection means in the same plane. Since the information selection means make a majority selection, the selected data passed to the switch store means will be correct in each plane, even if data received on the data input of only of said planes should be erroneous.

When connecting and disconnecting time-multiplexed connections through the switch, the control information in the control store means shall be changed in those store locations belonging to the connections to be connected or disconnected. Thus, when connecting and disconnecting connections, control information selected by the first information selection means shall not be rewritten into the control store means. Instead fresh information shall be stored in corresponding store locations in the control store means.

The fresh control information to be stored in the control store means of one plane is selected by the third information selection means in the same plane. Since the information selection means make a majority selection, the correct control information is selected in each plane, even though the control information received on the control information input of only one individual plane should be erroneous.

Data to be produced on the data output of a plane is selected by the fourth information selection means in the same plane. Since the information selection means make a majority selection, the correct data will be selected on the data output of each plane, even if the data from the switch store means of one single plane should be erroneous.

It can be said in summary that the information selection means of the three planes enable erroneous data or control information or faulty means in one plane to be functionally replaced with corresponding error-free data or control information or corresponding error-free means in the two remaining planes, so that error-free data can be obtained from all three planes. On the other hand, in the case of simultaneous and corresponding errors in at least two planes, erroneous data will be obtained from all three planes. The three planes in combination with information selection means and the re-writing of selected control information into the same position of the control store means imparts to the switch a certain degree of self-healing capability upon the occurrence of a temporary error in the control information.

With the use of four information selection means in accordance with Figure 1, it is possible in certain cases to obtain correct data on the data output of all three planes, even when no plane is completely error-free. For example, the control store means CSA and the switch store means SSB can be erroneous at the same time as the plane PLC receives erroneous data and/or control information on its outputs without error in data occuring on any data output of the plane.

The triplication of the information selection means, in particular the first information selection means makes the switch less sensitive to errors in an information selection means.

The triplicated second and fourth information selection means prevent to a great extent the spreading of errors from one switch to another switch in a multiple switch structure, e.g. a time-space or a time-space-time switch. This facilitates maintenance and error localization.

The invention is not restricted to the embodiment illustrated in the drawing. For example, it is conceivable not to provide a fourth information selection means in each plane. Preferably other kinds of a time-multiplex telecommunication system which receives data from the switch planes may then include means for selection between corresponding data received from the planes. It is also conceivable to omit some second or third information selection in each plane connected to the data and control information inputs of the planes, in case of particularly small risks of error in the data and/or control information passed to the planes in the switch. Preferably other parts of a time-multiplex telecommunication system which send data or control information to the planes of the switch may then include data and control information supervising or checking means.

Although parity or error supervising result information is not utilized in the selections made in the information selection means in each plane of the switch, it will be understood that a switch and a method according to the present invention can be conceivably used in those instances when the supplied data or line information includes parity bits or error supervising result information.

Furthermore, even though the equipment of the three planes of the illustrated embodiment are separated in three planes delimited by chain lines, it is, of course, not absolutely necessary for the equipment to be physically located in three mutually separated planes in the switch. For reasons of a practical nature it may be advantageous in some instances to physically co-localize certain equipment from different planes, for example to co-localize said equipment in one and the same capsule for integrated circuits.

In addition to the illustrated and aforedescribed means, a switch constructed in accordance with the invention may, of course, also include further means of a conventional kind, e.g. current supply means and time synchronizing means for mutually synchronizing corresponding means in the switch planes with the aid of clock and synchronizing pulses.

The illustrated time switch may form a part of a coupling node for timemultiplexed communication connections. The coupling node may include a plurality of similar switches or other switches such that, for instance, a TS-structure (time-space) or TST-structure (time-space-time) is obtained by the coupling node switch.

## Claims

1. A method for error correction in switches which include synchronously operating means in three planes, for use in time-multiplexed telecommunication systems, which time switch for each plane includes switch store means (SSA, SSB, SSC) and control store means (CSA, CSB, CSC), in which method incoming data distributed on a plurality of incoming data time slots is stored in the switch store means, and control information is sent to and stored in the control store means, and data is read from the switch store means and distributed on a plurality of outgoing data time slots in accordance with control information sent to the switch store means from the control store means, said control information being obtained by reading corresponding stored control information from the control memory means in the three planes and by selection between corresponding control information read from different planes, characterized in that control information sent to the switch store means in one plane is obtained by comparing bit for bit and majority selection bit for bit between corresponding control information deriving from the control store means in the three planes; and in that into the control store means is re-written control information which is obtained by bit for bit comparison and bit for bit majority selection between corresponding conrol information deriving from the control store means in the three planes, (PLA, PLB, PLC).

2. A method according to claim 1, characterized in that data supplied to the switch store means of one plane for storage in said means is obtained by bit for bit comparison and bit for bit majority selection between corresponding data deriving from the three different planes (PLA, PLB, PLC).

3. A method according to claim 1 or claim 2, characterized in that control information sent to the control store means in one plane for storage in said means is obtained by bit for bit comparison and bit for bit majority selection between corresponding control information deriving from the three different planes (PLA, PLB, PLC).

4. A method according to claim 1, 2 or 3, characterized in that data distributed on outgoing data time slots in one plane is obtained by bit for bit comparison and bit for bit majority selection between corresponding data read out from the three different planes (PLA, PLB, PLC).

5. A time switch which includes synchronously operating means in three planes and intended for use in a time-multiplexed telecommunication system, said time switch including for each plane switch store means (SSA, SSB, SSC) for the storage of incoming data distributed on a plurality of incoming data time slots, and further including for each plane control store means (CSA, CSB, CSC) for the storage of digital control information relating to set up connections through the switch, said control store means of one plane being connected to the switch store means of said plane via first information selection means (MD1A, MD2A, MD3A) for said plane, said first information selection means for one plane being connected for the receipt of and the selection between corresponding control information from the control store means for more than one plane, said switch store means for one plane being connected and configured to read-out stored data in dependence on selected control information for said plane such that the data read out is distributed on a plurality of outgoing data time slots in accordance with the established connections characterized in that, the time switch for each plane includes re-write means (RWA, RWB, RWC) which are connected to the control store means and the first information selection means for the plane for re-writing selected control information for said plane into the control store means of said plane, and in that the first information selector means for a plane (MD1A, MD1B, MD1C) is constructed to effect a bit for bit comparison and a bit for bit majority selection between corresponding control information deriving from the control store means of the three planes (PLA, PLB, PLC).

6. A time switch according to claim 5, characterized in that each plane of the switch includes second information selection means (MD2A, MD2B, MD2C) which are connected for receiving incoming time multiplexed data for three different planes, these second information selection means for one plane being constructed for bit for bit comparison and for bit majority selection between incoming time-multiplex data for the three planes; and in that the second information selection means for one plane are connected to the switch store means of said plane for passing selected incoming time-multiplex data to the switch store means for storage therein.

7. A time switch according to claim 5 or 6, characterized in that each plane of the switch includes third information selection means (MD3A, MD3B, MD3C) which are connected for receiving control information for three different planes (PLA, PLB, PLC), which third information selection means for one plane are constructed to effect a bit for bit comparison and a bit for bit majority selection between corresponding control information for the three planes, and in that the third information selection means for one plane is connected to the control store means for said plane such as to pass selected control information for said plane to the control store means for storage herein.

8. A time switch according to claim 5, 6 or 7, characterized in that each plane of the switch includes fourth information selection means (MD4A, MD4B, MD4C) connected for receiving data read from the switch store means for three planes (PLA, PLB, PLC), these fourth information selection means for one plane being constructed to effect a bit for bit comparison and a bit for bit majority selection between corresponding data read from the three planes and to distribute selected data on outgoing data time slots for said plane.

**Patentansprüche**

1. Verfahren zur Fehlerkorrektur in Schaltern, die synchron arbeitende Einrichtungen in drei Ebenen enthalten, zur Verwendung in Zeitmultiplex-Nachrichtenübertragungssystemen, bei denen ein Zeitschalter für jede Ebene eine Schaltspeichereinrichtung (SSA, SSB, SSC) und eine Steuerspeichereinrichtung (CSA, CSB, CSC) enthält, bei welchem Verfahren eingehende Daten, die auf einer Mehrzahl eingehender Datenzeitschlitze verteilt sind, in der Schaltspeichereinrichtung gespeichert werden, und Steuerdaten der Steuerspeichereinrichtung zugeführt und in dieser gespeichert werden, und Daten aus der Schaltspeichereinrichtung ausgelesen und auf einer Anzahl abgehender Datenzeitschlitze entsprechend den Steuerdaten verteilt werden, die der Schaltspeichereinrichtung aus der Steuerspeichereinrichtung zugeführt werden, und die Steuerdaten erhalten werden mittels Auslesen entsprechender gespeicherter Steuerdaten aus der Steuerspeichervorrichtung in den drei Ebenen und mittels Auswahl zwischen entsprechenden, aus den verschiedenen Ebenen ausgelesenen Steuerdaten, dadurch **gekennzeichnet,** dass Steuerdaten, die der Schaltspeichereinrichtung in einer Ebene zugeführt werden, erhalten werden, indem Bit-für-Bit und Majoritätswählbit-für-Bit zwischen entsprechenden Steuerdaten verglichen werden, die sich von der Steuerspeichereinrichtung in den drei Ebenen ableiten; und dass in die Steuerspeichereinrichtung Steuerdaten erneut eingeschrieben werden, die durch einen Bit-für-Bit-Vergleich und eine Bit-für-Bit-Majoritätswahl zwischen entsprechenden Steuerdaten erhalten werden, die sich aus der Steuerspeichereinrichtung in den drei Ebenen (PLA, PLB, PLC) ableiten.

2. Verfahren nach Anspruch 1, dadurch **gekennzeichnet,** dass die Daten, die der Schaltspeichereinrichtung einer Ebene zwecks Speicherung in dieser Ebene zugeführt werden, durch einen Bit-für-Bit-Vergleich und eine Bit-für-Bit-Majoritätswahl zwischen entsprechenden Daten erhalten werden, die sich von den drei verschiedenen Ebenen (PLA, PLB, PLC) ableiten.

3. Verfahren nach Anspruch 1 oder 2, dadurch **gekennzeichnet,** dass Steuerdaten, die der Steuerspeichereinrichtung in einer Ebene zur Speicherung in dieser Einrichtung zugeführt werden, durch einen Bit-für-Bit-Vergleich und eine Bit-für-Bit-Majoritätswahl zwischen entsprechenden Steuerdaten erhalten werden, die sich aus den drei verschiedenen Ebenen (PLA, PLB, PLC) ableiten.

4. Verfahren nach Anspruch 1, 2 oder 3, dadurch **gekennzeichnet,** dass Daten, die in den abgehenden Datenzeitschlitzen in einer Ebene verteilt sind, mittels eines Bit-für-Bit-Vergleichs und einer Bit-für-Bit-Majoritätswahl zwischen entsprechenden Daten erhalten werden, die aus den drei verschiedenen Ebenen (PLA, PLB, PLC) ausgelesen werden.

**5.** Zeitschalter, der eine synchron arbeitende Einrichtung in drei Ebenen enthält und zur Verwendung in einem Zeitmultiplex-Nachrichtenübertragungssystem bestimmt ist, der Zeitschalter für jede Ebene eine Schaltspeichereinrichtung (SSA, SSB, SSC) zur Speicherung eingehender Daten enthält, die in einer Anzahl eingehender Datenzeitschlitze verteilt sind, und der ferner für jede Ebene eine Steuerspeichereinrichtung (CSA, CSB, CSC) für die Speicherung digitaler Steuerdaten enthält, die sich auf die Erstellung von Verbindungen durch den Schalter beziehen, die Steuerspeichereinrichtung einer Ebene mit der Schaltspeichereinrichtung dieser Ebene über eine erste Datenwähleinrichtung (MD1A, MD2A, MD3A) für diese Ebene verbunden ist, die erste Datenwähleinrichtung für eine Ebene zum Empfang und zur Auswahl zwischen entsprechenden Steuerdaten aus der Steuerspeichereinrichtung für mehr als eine Ebene angeschlossen ist, die Schaltspeichereinrichtung für eine Ebene angeschlossen und ausgestaltet ist, um gespeicherte Daten, abhängig von gewählten Steuerdaten für diese Ebene derart auszulesen, dass die ausgelesenen Daten auf einer Anzahl ausgehender Datenzeitschlitze in Einklang mit den hergestellten Anschlüssen verteilt werden, **dadurch gekennzeichnet,** dass der Zeitschalter für jede Ebene eine Einrichtung zum erneuten Einschreiben (RWA, RWB, RWC) enthält, die mit der Steuerspeichereinrichtung und der ersten Datenwähleinrichtung für die Ebene verbunden ist, um ausgewählte Steuerdaten für die Ebene erneut in die Steuerspeichereinrichtung dieser Ebene einzuschreiben, und dass die erste Datenwähleinrichtung für eine Ebene (MD1A, MD1B, MD1C) derart aufgebaut ist, um einen Bit-für-Bit-Vergleich und eine Bit-für-Bit-Majoritätswahl zwischen entsprechenden Steuerdaten zu bewirken, die sich von der Steuerspeichereinrichtung der drei Ebenen (PLA, PLB, PLC) ableiten.

**6.** Zeitschalter nach Anspruch 5, **dadurch gekennzeichnet,** dass jede Ebene des Schalters eine zweite Datenwähleinrichtung (MD2A, MD2B, MD2C) enthält, die zum Empfang eingehender Zeitmultiplex-Daten für drei verschiedene Ebenen angeschlossen sind, diese zweite Datenwähleinrichtung für eine Ebene für einen Bit-für-Bit-Vergleich und eine Bit-Majoritätswahl zwischen eingehenden Zeitmultiplex-Daten für die drei Ebenen aufgebaut ist; und dass die zweite Wähleinrichtung für eine Ebene an die Schaltspeichereinrichtung der Ebene angeschlossen ist, um ausgewählte eingehende Zeitmultiplex-Daten der Schaltspeichereinrichtung zur Speicherung darin abzugeben.

**7.** Zeitschalter nach Anspruch 5 oder 6, **dadurch gekennzeichnet,** dass jede Ebene des Schalters eine dritte Datenwähleinrichtung (MD3A, MD3B, MD3C) aufweist, die angeschlossen sind, um Steuerdaten für drei verschiedene Ebenen (PLA, PLB, PLC) zu empfangen, die dritte Datenwähleinrichtung für eine Ebene derart aufgebaut ist, um einen Bit-für-Bit-Vergleich und eine Bit-für-Bit-Majoritätswahl zwischen entsprechenden Steuerdaten für die drei Ebenen durchzuführen, und dass die dritte Datenwähleinrichtung für eine Ebene an die Steuerspeichereinrichtung für diese Ebene angeschlossen ist, um ausgewählte Steuerdaten für diese Ebene an die Steuerspeichereinrichtung zwecks Speicherung hierin abzugeben.

**8.** Zeitschalter nach Anspruch 5, 6 oder 7, **dadurch gekennzeichnet,** dass jede Ebene des Schalters eine vierte Datenwähleinrichtung (MD4A, MD4B, MD4C) enthält, die zum Empfang von Daten angeschlossen ist, die aus der Schaltspeichereinrichtung für die drei Ebenen (PLA, PLB, PLC) ausgelesen werden, diese vierte Datenwähleinrichtung für eine Ebene so aufgebaut ist, um einen Bit-für-Bit-Vergleich und eine Bit-für-Bit-Majoritätswahl zwischen entsprechenden, aus den drei Ebenen ausgelesenen Daten durchzuführen und die ausgewählten Daten in den abgehenden Datenzeitschlitzen für diese Ebene zu verteilen.

## Revendications

**1.** Un procédé de correction d'erreur dans des autocommutateurs qui comprennent des moyens fonctionnant en synchronisme dans trois plans, prévus pour l'utilisation dans des systèmes de télécommunication en multiplex temporel, l'autocommutateur comprenant, pour chaque plan, des moyens de mémoire d'autocommutateur (SSA, SSB, SSC) et des moyens de mémoire de commande (CSA, CSB, CSC), ce procédé étant un procédé dans lequel des données entrantes réparties en un ensemble de créneaux temporels de données entrantes sont enregistrées dans les moyens de mémoire d'autocommutateur, une information de commande est émise vers les moyens de mémoire de commande et est enregistrée dans ceux-ci, et des données sont lues dans les moyens de mémoire d'autocommutateur et sont réparties entre un ensemble de créneaux temporels de données sortantes, conformément à l'information de commande que les moyens de mémoire de commande émettent vers les moyens de mémoire d'autocommutateur, cette information de commande étant obtenue par la lecture d'une information de commande enregistrée correspondante dans les moyens de mémoire de commande dans les trois plans, et par une sélection entre les informations de commande correspondantes qui sont lues dans différents plans, caractérisé en ce que l'information de commande qui est émise vers les moyens de mémoire d'autocommutateur dans un plan est obtenue en effectuant une comparaison bit à bit et une sélection majoritaire bit à bit entre les informations de commande correspondantes qui sont obtenues à partir des moyens de mémoire de commande dans les trois plans; et en ce que l'information de commande qui est obtenue par comparaison bit à bit et par sélection majoritaire bit à bit entre des informations de commande correspondantes provenant des moyens de mémoire de commande dans les trois plans (PLA, PLB, PLC), est réécrite dans les moyens de mémoire de commande.

2. Un procédé selon la revendication 1, caractérisé en ce que les données qui sont appliquées aux moyens de mémoire d'autocommutateur d'un plan, pour l'enregistrement dans ces moyens, sont obtenues par comparaison bit à bit et par sélection majoritaire bit à bit entre des données correspondantes qui proviennent des trois plans différents (PLA, PLB, PLC).

3. Un procédé selon la revendication 1 ou 2, caractérisé en ce que l'information de commande qui est émise vers les moyens de mémoire de commande dans un plan, pour l'enregistrement dans ces moyens, est obtenue par comparaison bit à bit et par sélection majoritaire bit à bit entre les informations de commande correspondantes qui proviennent des trois plans différents (PLA, PLB, PLC).

4. Un procédé selon la revendication 1, 2 ou 3, caractérisé en ce que les données réparties entre des créneaux temporels de données sortantes dans un plan sont obtenues par comparaison bit à bit et par sélection majoritaire bit à bit entre des données correspondantes qui sont lues dans les trois plans différents (PLA, PLB, PLC).

5. Un autocommutateur temporel comprenant des moyens qui fonctionnent en synchronisme dans trois plans, et qui est destiné à être utilisé dans un système de télécommunication en multiplex temporel, cet autocommutateur temporel comprenant, pour chaque plan, des moyens de mémoire d'autocommutateur (SSA, SSB, SSC) prévus pour l'enregistrement de données entrantes réparties entre un ensemble de créneaux temporels de données entrantes, et comprenant en outre pour chaque plan des moyens de mémoire de commande (CSA, CSB, CSC) pour l'enregistrement d'une information de commande numérique concernant des connexions établies dans l'autocommutateur, les moyens de mémoire de commande d'un plan étant connectés aux moyens de mémoire d'autocommutateur de ce plan par l'intermédiaire d'un premier moyen de sélection d'information (MD1A, MD2A, MD3A) pour ce plan, le premier moyen de sélection d'information pour un plan étant connecté de façon à recevoir des informations de commande correspondantes provenant des moyens de mémoire de commande pour plus d'un plan, et à effectuer une sélection entre ces informations, les moyens de mémoire d'autocommutateur pour un plan étant connectés et conçus de façon à lire des données enregistrées sous la dépendance de l'information de commande sélectionnée pour le plan considéré, de façon que les données qui sont lues soient réparties entre un ensemble de créneaux temporels de données sortantes, conformément aux connexions établies, caractérisé en ce que l'autocommutateur pour chaque plan comprend des moyens de réécriture (RWA, RWB, RWC) qui sont connectés aux moyens de mémoire de commande et au premier moyen de sélection d'information pour le plan, pour réécrire une information de commande sélectionnée pour ce plan, dans les moyens de mémoire de commande de ce plan, et en ce que le premier moyen de sélection d'information pour un plan (MD1A, MD1B, MD1C) est réalisé de façon à effectuer une comparaison bit à bit et une sélection majoritaire bit à bit entre des informations de commande correspondantes qui sont obtenues à partir des moyens de mémoire de commande des trois plans (PLA, PLB, PLC).

6. Un autocommutateur temporel selon la revendication 5, caractérisé en ce que chaque plan de l'autocommutateur comprend un second moyen de sélection d'information (MD2A, MD2B, MD2C) qui est connecté de façon à recevoir des données en multiplex temporel entrantes pour trois plans différents, ce second moyen de sélection d'information pour un plan étant réalisé de façon à effectuer une comparaison bit à bit et une sélection majoritaire bit à bit entre des données en multiplex temporel entrantes pour les trois plans; et en ce que le second moyen de sélection d'information pour un plan est connecté aux moyens de mémoire d'autocommutateur de ce plan pour transmettre des données en multiplex temporel entrantes sélectionnées aux moyens de mémoire d'autocommutateur, pour l'enregistrement dans ces derniers.

7. Un autocommutateur temporel selon la revendication 5 ou 6, caractérisé en ce que chaque plan de l'autocommutateur comprend un troisième moyen de sélection d'information (MD3A, MD3B, MD3C) qui est connecté de façon à recevoir une information de commande pour trois plans différents (PLA, PLB, PLC), ce troisième moyen de sélection d'information pour un plan étant réalisé de façon à effectuer une comparaison bit à bit et une sélection majoritaire bit à bit entre des informations de commande correspondantes pour les trois plans, et en ce que le troisième moyen de sélection d'information pour un plan est connecté aux moyens de mémoire de commande pour ce plan, de façon à transmettre une information de commande sélectionnée pour ce plan aux moyens de mémoire de commande, pour l'enregistrement dans ces derniers.

8. Un autocommutateur temporel selon la revendication 5, 6 ou 7, caractérisé en ce que chaque plan de l'autocommutateur contient un quatrième moyen de sélection d'information (MD4A, MD4B, MD4C) connecté de façon à recevoir des données qui sont lues dans les moyens de mémoire d'autocommutateur pour trois plans (PLA, PLB, PLC), ce quatrième moyen de sélection d'information pour un plan étant réalisé de façon à effectuer une comparaison bit à bit et une sélection majoritaire bit à bit entre des données correspondantes qui sont lues dans les trois plans, et à répartir des données sélectionnées entre des créneaux temporels de données sortantes pour ce plan.

Fig.